# FASCICULE DE BREVET EUROPEEN

(11) **EP 3 000 141 B1**
(45) Date de publication et mention de la délivrance du brevet: **09.01.2019**
(21) Numéro de dépôt: 14723885.1
(22) Date de dépôt: 14.04.2014
(51) Int. Cl.: H01M 2/08, H01M 4/485, H01M 10/04, H01M 10/0525, H01M 10/0585, H01M 4/58, H01M 4/02, H01M 4/66

(54) **BATTERIE LI-ION BIPOLAIRE À ÉTANCHÉITE AMÉLIORÉE ET PROCÉDÉ DE RÉALISATION ASSOCIÉ**
BIPOLARE LI-IONEN-BATTERIE MIT VERBESSERTER ABDICHTUNG UND ZUGEHÖRIGES VERFAHREN ZUR HERSTELLUNG
BIPOLAR LI-ION BATTERY HAVING IMPROVED SEALING AND ASSOCIATED METHOD OF PRODUCTION

(30) Priorité: 21.05.2013 FR 1354543
(43) Date de publication de la demande: 30.03.2016
(73) Titulaire: Commissariat à l'Energie Atomique et aux Energies Alternatives, 75015 Paris (FR)
(72) Inventeur: MOREAU, Gilles, F-38000 Grenoble (FR); BOUVIER, Michaël, F-38760 Varces Allieres Et Risset (FR)
(74) Mandataire: Nony
(86) Numéro de dépôt international: PCT/IB2014/060698
(87) Numéro de publication internationale: WO 2014/188288

(56) Documents cités:
- EP-A2- 1 418 638
- JP-A- H0 547 360
- US-A1- 2012 171 567

## Description

### Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins un collecteur de courant à fonction bipolaire, aussi appelé batterie bipolaire. Dans une telle batterie bipolaire, le collecteur bipolaire aussi appelé électrode bipolaire, supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

L'invention vise à améliorer l'étanchéité des générateurs électrochimiques vis-à-vis de l'électrolyte, et en particulier à améliorer l'étanchéité d'une batterie bipolaire vis-à-vis de l'électrolyte sous forme liquide.

### Etat de la technique

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348 ;
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui-même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

Afin d'augmenter le potentiel moyen d'un accumulateur Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreux brevets ou demandes de brevets concernant de telles batteries bipolaires, tels que US 7279248, US 7220516, US 7320846, US 7163765, WO 03/047021, WO 2006/061696, US 7097937.

Les avantages subséquents d'une batterie bipolaire sont d'avoir une masse réduite et de ne pas comporter de volumes inutiles.

La principale difficulté de conception d'une batterie bipolaire est la réalisation de compartiments parfaitement étanches à l'électrolyte, en général sous forme liquide, les uns vis-à-vis des autres. En effet, une mauvaise étanchéité entraine un dysfonctionnement de la batterie bipolaire par court-circuits ioniques.

Cela est d'ailleurs corroboré par le fait que la majorité de la littérature brevets portant sur le domaine des batteries Li-ion bipolaires concerne des solutions d'étanchéité, aussi appelée scellement, pour éviter les fuites d'électrolyte d'un compartiment à l'autre (courts circuits ioniques). Quel que soit le système d'étanchéité retenu, il doit :
- être résistant chimiquement à l'électrolyte liquide, par exemple constitué d'une solution de sel de Lithium LiPF₆ dans un mélange de solvant carboné d'éthylène (EC), diméthyle carbonate (DMC) ;
- être facile à mettre en oeuvre : en effet, lors des opérations d'empilement des différents éléments constituants une batterie bipolaire, la mise en oeuvre de l'étanchéité doit pouvoir être compatible avec une ligne de fabrication industrielle et être réalisée à des relativement basses températures ne générant pas ou prou de dégradation des électrodes, du séparateur ou encore de l'électrolyte;
- assurer une étanchéité totale à long terme.

Parmi les demandes de brevet ou brevets déjà cités ci-dessus, on peut citer le brevet US 7220516 qui décrit une solution avec un film adhésif flexible 5, 6, collé sur la périphérie du collecteur bipolaire.

On peut également citer le brevet US 7320846 qui décrit une solution d'enrobage des collecteurs 4 et électrolytes 6 dans une résine 10.

On peut également citer le brevet US 7163765 qui décrit une solution d'étanchéité avec des entretoises 9 mixtes en polyamide/PP agencées entre collecteurs bipolaires, le polyamide étant soudé directement à la périphérie des collecteurs à distance des cellules.

Le brevet US 7097937 propose quant à lui une solution d'étanchéité double puisqu'une barrière intérieure 14, 22 en fluoropolymère est agencée sur la périphérie du collecteur bipolaire 11 et un cordon extérieur 18, 23 en élastomère est agencé à l'extérieur de la barrière 14, 22 sur et autour du collecteur bipolaire avec éventuellement l'agencement d'une bague supplémentaire 15 en élastomère sur le collecteur 11.

On peut citer encore la demande de brevet EP 2073300 au nom de la demanderesse qui propose une solution selon laquelle les dimensions des plaques sont augmentées l'une par rapport à l'autre adjacente et les joints d'étanchéité interposés entre les plaques interconnectrices sont décalés transversalement afin que deux joints ne se trouvent pas au droit l'un de l'autre selon l'axe d'empilement des cellules.

On peut citer enfin la demande WO2011/157751 qui décrit une solution d'intégration des moyens d'étanchéité à base de polymère à une grille ou feuille métallique à fonction de collecteur de courant.

Ainsi, on peut résumer de la manière suivante les solutions déjà envisagées pour améliorer l'étanchéité des compartiments entre eux vis-à-vis de l'électrolyte dans une batterie bipolaire Li-ion :
- réalisation systématique du collecteur de courant bipolaire aussi appelé électrode bipolaire sous la forme d'une plaque,
- utilisation de colles/polymère ou résines diverses à la périphérie de la plaque,
- augmentation du format de plaque de collecteur de courant bipolaire pour créer une barrière supplémentaire à l'électrolyte,
- intégration des moyens d'étanchéité à base de polymère à une grille ou feuille métallique à fonction de collecteur de courant.

Toutes ces solutions d'étanchéité déjà envisagées ne sont pas pleinement satisfaisantes. En effet, elles utilisent des polymères ou résines qui présentent une robustesse par rapport à l'électrolyte qui est faible lors du fonctionnement de la batterie bipolaire et dans la durée. Enfin, le thermoscellage d'un polymère au niveau d'un compartiment prévu lors de la fabrication de la batterie bipolaire peut entraîner une détérioration d'étanchéité des compartiments électrochimiques déjà scellés du fait même du chauffage répété qui peut entraîner un fluage intempestif du polymère de ces derniers.

Si la solution selon la demande WO 2011/157751 est parfaitement satisfaisante pour l'étanchéité à proprement parler ainsi que pour le gain de poids qu'elle apporte au final à la batterie bipolaire, elle peut limiter la conductivité électronique entre les deux matériaux d'électrode (matériaux d'insertion au lithium) de part et d'autre d'un collecteur de courant bipolaire et augmenter les résistances électriques internes à ce dernier. La demande EP1418638 concerne également des batteries bipolaires électrochimiques empilées et décrit un agencement d'étanchéité alternatif.

Le but général de l'invention est de proposer une autre solution que celles déjà envisagées pour améliorer l'étanchéité des compartiments entre eux vis-à-vis de l'électrolyte, en particulier de l'électrolyte liquide, dans une batterie bipolaire Li-ion, plus généralement dans un générateur électrochimique au lithium.

Un but particulier est de proposer une solution d'étanchéité d'une batterie bipolaire, plus généralement d'un générateur électrochimique au lithium, vis-à-vis de l'électrolyte, plus particulièrement d'un électrolyte liquide, qui soit robuste lors du fonctionnement et dans la durée, facile à mettre en oeuvre, de préférence à relativement basse température, qui ne limite pas la conductivité électronique des matériaux d'insertion au lithium et n'augmente pas les résistances électriques internes au(x) collecteur(s) bipolaire(s).

### Exposé de l'invention

Pour ce faire, l'invention a pour objet une batterie bipolaire, de type Li-ion, comprenant :
- au moins une première et deuxième cellules électrochimiques empilées l'une sur l'autre et comportant chacune une anode, une cathode et un électrolyte ;
- au moins un collecteur de courant bipolaire dont une face est recouverte de l'anode en matériau d'insertion au lithium de la première cellule et la face opposée est recouverte de la cathode en matériau d'insertion au lithium de la deuxième cellule, le collecteur bipolaire comportant à sa périphérie, sur une de ses faces, au moins un premier dispositif d'étanchéité comprenant un cadre en matériau isolant électrique et thermosensible, et deux cadres en matériau isolant électrique et adhésif agencés individuellement de part et d'autre du cadre thermosensible selon une direction radiale, perpendiculaire à la direction d'empilement des cellules,, le premier dispositif constituant une paroi périphérique étanche à l'électrolyte de la première ou deuxième cellule, qui entoure celle-ci ;
- au moins un premier collecteur de courant adjacent au collecteur bipolaire dont une face est recouverte de la cathode de la première cellule ;
- au moins un deuxième collecteur de courant adjacent au collecteur bipolaire dont une face est recouverte de l'anode de la deuxième cellule;
- le premier ou le deuxième collecteur adjacent comportant également, à sa périphérie, sur sa face recouverte, au moins un deuxième dispositif d'étanchéité comprenant un cadre d'un matériau isolant électrique et thermosensible, et deux cadres en matériau isolant électrique et adhésif agencés individuellement de part et d'autre du cadre thermosensible selon une direction radiale, perpendiculaire à la direction d'empilement des cellules, le deuxième dispositif constituant une paroi périphérique étanche à l'électrolyte de la première ou deuxième cellule, qui entoure celle-ci ;
chaque paroi périphérique étanche étant obtenue par une technique de thermo-scellage d'au moins un premier et au moins un deuxième dispositif d'étanchéité sur la face d'un collecteur de courant dépourvue de dispositif d'étanchéité.

Par « agencés individuellement de part et d'autre du cadre thermosensible selon une direction radiale, perpendiculaire à la direction d'empilement des cellules », il faut comprendre que les cadres sont agencés adjacents l'un derrière l'autre à la périphérie. L'épaisseur d'un compartiment électrochimique défini par une cellule est déterminée par la seule épaisseur du premier cadre adhésif, c'est-à-dire celui qui est agencé le plus à la périphérie.

Ainsi, selon l'invention, on met en oeuvre pour chaque compartiment électrochimique défini par une cellule, un dispositif d'étanchéité qui est un objet isolant électrique formé d'un matériau adhésif, de préférence double-face, sous forme de deux cadres, encadrant un cadre de matériau thermosensible pour permettre une étanchéité totale dudit compartiment par thermo-scellage après chauffage.

Selon l'invention, le matériau à coeur du cadre adhésif est différent du matériau thermosensible. Le matériau thermosensible présente une température de fluage inférieure à celle du matériau du cadre adhésif.

Avantageusement, le matériau thermosensible présente une température de fluage comprise entre 80°C et 170°C, de préférence de l'ordre de 140 + ou - 10 °C.

L'invention permet d'assurer :
- une étanchéité des différents compartiments électrochimiques d'une batterie (accumulateur) bipolaire vis-à-vis de l'électrolyte, i.e. empêchant les fuites vers l'extérieur ou entre compartiments, et vis-à-vis de l'air ambiant, i.e. empêchant les fuites vers l'intérieur des compartiments, grâce à l'utilisation d'un matériau thermosensible inerte à l'électrolyte ;
- une étanchéité renforcée à l'aide d'un dispositif d'étanchéité à trois cadres: un premier cadre adhésif à la périphérie de chaque compartiment en assure l'isolation électrique et sert de cale d'épaisseur pour définir l'épaisseur dudit compartiment, à l'intérieur du premier cadre adhésif, un cadre à base de matériau thermosensible qui assure l'étanchéité parfaite à l'électrolyte, et à l'intérieur du cadre thermosensible un deuxième cadre adhésif qui permet avec le premier cadre adhésif de cloisonner dans les trois dimensions le fluage du matériau thermosensible, c'est-à-dire qui permet de maitriser parfaitement la géométrie du joint d'étanchéité défini ;
- une maitrise du collage permettant un maintien de l'assemblage de la batterie bipolaire avec une parfaite tenue mécanique d'une part à l'intérieur et à l'extérieur du cadre thermosensible pour chaque compartiment et d'autre part de l'empilement de toutes les cellules du fait que chaque compartiment est collé dans sa position optimale par rapport au(x) compartiment(s) adjacents(s) grâce aux deux cadres adhésifs double face ;
- une maitrise de l'épaisseur constante de chaque compartiment permettant un fonctionnement optimal de la batterie bipolaire, du fait qu'un dispositif d'étanchéité selon l'invention sert d'entretoise.

Grâce à l'invention, on pallie aux solutions d'étanchéité à base de résine ou de polymère selon l'état de l'art. En particulier, l'invention permet de résoudre les problèmes de répétabilité d'étanchéité sur l'ensemble d'une batterie bipolaire avec des joints thermo-durcissant ou thermo-scellant selon l'état de l'art. En effet, ces problèmes de répétabilité se posent à cause de la méthode de remplissage sous vide utilisée. Cette méthode impose de mettre sous pression et sous température les compartiments les uns après les autres générant ainsi des contraintes de fluage du joint suivant sa position dans l'empilement de la batterie bipolaire. De ce fait, certains compartiments électrochimiques peuvent ne plus être étanches, vis-à-vis de l'électrolyte mais aussi vis-à-vis de l'environnement humide extérieur.

Autrement dit, la présente invention propose une solution aux problèmes de fluage de joints thermo-scellant selon l'état de l'art, qui permet à la fois de maintenir constante l'épaisseur de chaque compartiment d'une batterie bipolaire et de fiabiliser l'étanchéité tout en la rendant durable et en facilitant le maintien de l'assemblage des compartiments lors de la fabrication.

Les matériaux isolants électriques constitutifs des cadres selon l'invention sont de très bons isolants électriques pour l'application batterie bipolaire visée selon l'invention et présentent une résistance chimique à l'électrolyte élevée et une résistance à des températures de fonctionnement élevées.

De préférence, le matériau du cadre du premier ou deuxième dispositif d'étanchéité est choisi parmi les polyoléfines thermoplastiques semi-cristallines: polyéthylène (PE), polypropylène (PP), polyméthylpentène (PMP), polybutène-1 (PB-1). De préférence encore, le matériau du cadre du premier ou deuxième dispositif d'étanchéité est le polyéthylène (PE).

Avantageusement, le matériau des cadres adhésifs est un acrylique biface à coeur en polypropylène (PP), ou en poly(téréphtalate d'éthylène) PET ou en polyuréthane.

Il est entendu que selon l'invention, le matériau du cadre interne est différent du matériau de coeur des cadres adhésifs.

Par « électrode en matériau d'insertion au Lithium », on entend une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi: oxyde de titane lithié ou non, par exemple Li₄Ti₅O₁₂ ou TiO₂. Plus particulièrement, le matériau d'électrode négative peut être choisi parmi les matériaux carbonés, les oxydes de titane non lithiés et leurs dérivés et les oxydes de titane lithiés tels que Li₄Ti₅O₁₂ et leurs dérivés et un mélange de ceux-ci.

Par « dérivé lithié », on entend des composés de formule Li₍₄₋ₓ₁₎Mₓ₁Ti₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici Ti_{(5-y1)}N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Par « collecteur de courant adjacent au collecteur de courant bipolaire », on entend un collecteur qui est le plus proche du collecteur de courant bipolaire dans l'empilement et qui peut être aussi bien un autre collecteur de courant bipolaire qu'un collecteur de courant terminal de l'empilement.

De préférence encore, l'épaisseur d'un dispositif d'étanchéité est comprise entre 50 et 500 µm, de préférence 150 µm plus ou moins 50 µm.

Avantageusement, la largeur d'un dispositif d'étanchéité est comprise entre 0,3 et 3 cm.

Selon un mode de réalisation, la batterie bipolaire comprend un empilement de n cellules électrochimiques, avec un nombre de n-2 collecteurs de courant bipolaires, l'un des collecteurs adjacents étant un collecteur de courant terminal, l'autre des collecteurs adjacents étant l'autre collecteur de courant terminal.

Selon une variante de réalisation, toutes les anodes sont en Li₄Ti₅O₁₂ et les cathodes en LiFePO₄.

L'invention a également pour objet, selon un autre de ses aspects un procédé de réalisation d'une batterie bipolaire comprenant au moins une première et deuxième cellules électrochimiques empilées l'une sur l'autre et comportant chacune une anode, une cathode et un électrolyte,
a/ réalisation d'un collecteur de courant bipolaire avec une face recouverte de l'anode en matériau d'insertion au lithium de la première cellule et la face opposée recouverte de la cathode en matériau d'insertion au lithium de la deuxième cellule ;
b/ réalisation d'un premier collecteur de courant, destiné à être adjacent au collecteur bipolaire dont une face est recouverte de la cathode de la première cellule ;
c/ réalisation d'un deuxième collecteur de courant, destiné à être adjacent au collecteur bipolaire dont une face est recouverte de l'anode de la deuxième cellule ;
d/ dépôt d'un cadre en matériau isolant électrique à la périphérie de chaque face de chaque collecteur recouverte d'une cathode ou d'une anode ;
e/ empilement du collecteur de courant bipolaire avec le premier ou le deuxième collecteur de courant avec intercalage d'un premier séparateur entre eux, l'empilement avec intercalage étant réalisé de sorte que la cathode du premier collecteur adjacent ou l'anode du deuxième collecteur de courant est en regard de respectivement l'anode ou la cathode du collecteur bipolaire en étant séparés du premier séparateur et avec mise en contact du cadre thermosensible du premier dispositif d'étanchéité;
f/ chauffage du cadre thermosensible du premier dispositif d'étanchéité en contact à la périphérie des collecteurs ;
g/ réalisation à la périphérie, sur sa face recouverte, du premier ou deuxième collecteur de courant non thermo-scellé au collecteur de courant bipolaire, d'au moins un deuxième dispositif d'étanchéité comprenant un cadre d'un matériau isolant électrique et thermosensible, et deux cadres d'adhésif agencés individuellement de part et d'autre du cadre thermosensible selon une direction radiale, perpendiculaire à la direction d'empilement des cellules ;
h/ empilement du collecteur de courant bipolaire thermo-scellé avec le premier ou le deuxième collecteur de courant avec le premier ou deuxième collecteur de courant non thermo-scellé avec intercalage d'un deuxième séparateur entre eux, l'empilement avec intercalage étant réalisé de sorte que la cathode du premier collecteur adjacent ou l'anode du deuxième collecteur de courant est en regard de respectivement l'anode ou la cathode du collecteur bipolaire en étant séparés du deuxième séparateur et avec mise en contact du cadre thermosensible du deuxième dispositif d'étanchéité;
i/ chauffage du cadre thermosensible du deuxième dispositif d'étanchéité en contact à la périphérie des collecteurs.

De préférence, on choisit une épaisseur initiale de matériau thermosensible supérieure à celle des cadres d'adhésif. Ainsi, lorsque la périphérie des compartiments est thermo-scellée lors des étapes f/ et i/, le matériau thermosensible a tendance à fluer dans l'espace qui lui est laissé libre entre les deux cadres adhésifs, jusqu'à atteindre leur épaisseur.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF₆, LiClO₄, LiBF₄ et LiAsF₆.

Alternativement, l'électrolyte peut comprendre un ou plusieurs liquides ioniques, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃sO₂)₃C].

Le chauffage selon les étapes f/ et i/ est de préférence réalisé à l'aide de mors chauffants en forme de U autour des parties périphériques des collecteurs, et de préférence à une température inférieure à 170 °C, de préférence encore inférieure à 150°C.

Il va de soi que les matériaux adhésifs présentent une température de fusion supérieure à la température de chauffage selon les étapes f/ et i/ permettant le thermo-scellage des cadres de matériau thermosensible. Autrement dit, les matériaux adhésifs sont résistants à la chaleur.

Dans un mode de réalisation avantageux, les adhésifs sont constitués par un acrylique biface à coeur en PP ou PET et le matériau thermosensible du cadre central est en PE.

### Description détaillée

D'autres avantages et caractéristiques ressortiront mieux à la lecture de la description détaillée, faite à titre illustratif en référence aux figures suivantes parmi lesquelles:
- la figure 1 est une vue schématique en coupe longitudinale d'une batterie bipolaire au lithium selon l'état de l'art ;
- les figures 2A et 2B sont respectivement des vues de face et en coupe d'un collecteur de courant bipolaire utilisé dans une batterie bipolaire au lithium selon l'état de l'art ;
- les figures 3A et 3B sont respectivement des vues de face et en coupe d'un autre collecteur de courant bipolaire utilisé dans une batterie bipolaire au lithium selon l'état de l'art ;
- la figure 4 est une vue en coupe longitudinale montrant le fluage d'un joint thermo-scellant mis en oeuvre dans une batterie bipolaire au lithium selon l'état de l'art ;
- la figure 5 est une vue en coupe longitudinale montrant un dispositif d'étanchéité utilisé dans une batterie bipolaire au lithium selon l'invention ;
- la figure 6 est une vue de dessus d'un collecteur de courant bipolaire avec un dispositif d'étanchéité selon l'invention ;
- les figures 7A à 7J sont des vues en coupe longitudinale montrant les différentes étapes de réalisation d'une batterie bipolaire au lithium à trois cellules électrochimiques (C1, C2, C3) selon l'invention;
- la figure 8 est une vue en coupe longitudinale d'une batterie bipolaire au lithium à trois cellules électrochimiques (C1, C2, C3) selon l'invention.

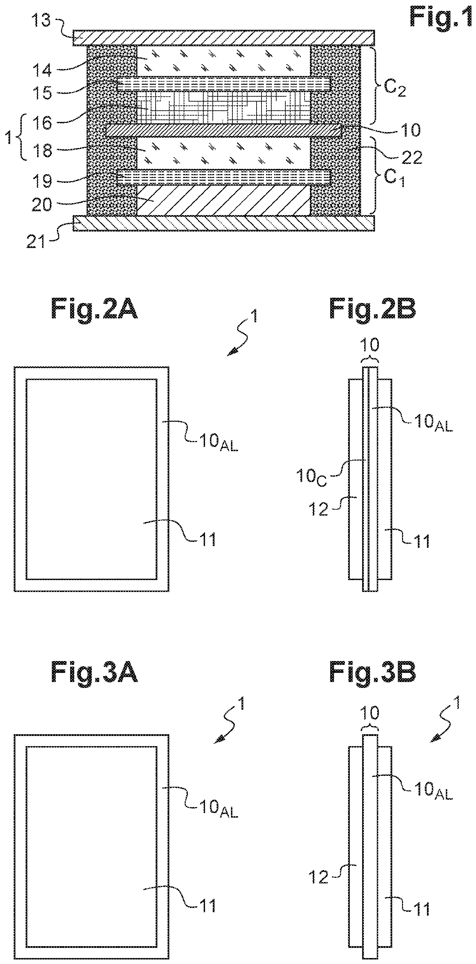

Par souci de clarté, les mêmes références désignant les mêmes éléments de batterie bipolaire selon l'état de l'art et selon l'invention sont utilisées pour toutes les figures 1 à 8.

On a représenté une batterie bipolaire Li-ion selon l'état de l'art en figure 1, telle qu'elle est illustrée dans la demande de brevet WO 03/047021. Cette batterie comporte en partie supérieure un substrat conducteur en aluminium 13 (collecteur de courant terminal positif) et une couche active 14 à base de matériau d'insertion au lithium positif, tel que du Li_{1.04}Mn_{1.96}O₄ et en partie inférieure un substrat conducteur en aluminium 21 (collecteur de courant terminal négatif) et une couche active 20 à base de matériau d'insertion au lithium positif, tel que du Li₄Ti₅O₁₂.

Au sein de cette batterie, une électrode bipolaire 1, aussi appelé collecteur de courant bipolaire, comprend une couche d'anode 16 et une couche de cathode 18 de part et d'autre d'un substrat conducteur en aluminium 10 sous la forme d'une plaque. Les électrodes inférieure 20 et supérieure 14 sont séparées de l'électrode bipolaire 1 par deux séparateurs 15, 19 dans lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 10.

Un collecteur de courant bipolaire 10 selon l'état de l'art est, en fonction des matériaux d'insertion aux ions lithium employés pour la réalisation des électrodes :
- soit constitué de deux plaques superposées, dont l'une typiquement en aluminium 10Al est recouverte par une cathode 11 et l'autre typiquement en cuivre 10C est recouverte par une anode 12 (figures 2A et 2B),
- soit constitué d'une seule plaque typiquement en aluminium 10 Al recouverte sur une des faces par une cathode 11 et sur l'autre de ses faces par une anode 12 (figures 3A et 3B). La difficulté principale rencontrée dans la conception d'une batterie bipolaire selon l'état de l'art est la réalisation de compartiments parfaitement étanches à l'électrolyte, en général sous forme liquide, les uns vis-à-vis des autres, tel qu'entre les deux cellules C1 et C2, c'est-à-dire entre compartiments référencés 14, 15, 16 et 18, 19, 20 sur la figure 1.

La réalisation des joints 22 ou l'augmentation des plaques 10 de l'électrode bipolaire selon l'état de l'art pour y parvenir ne sont pas pleinement satisfaisants.

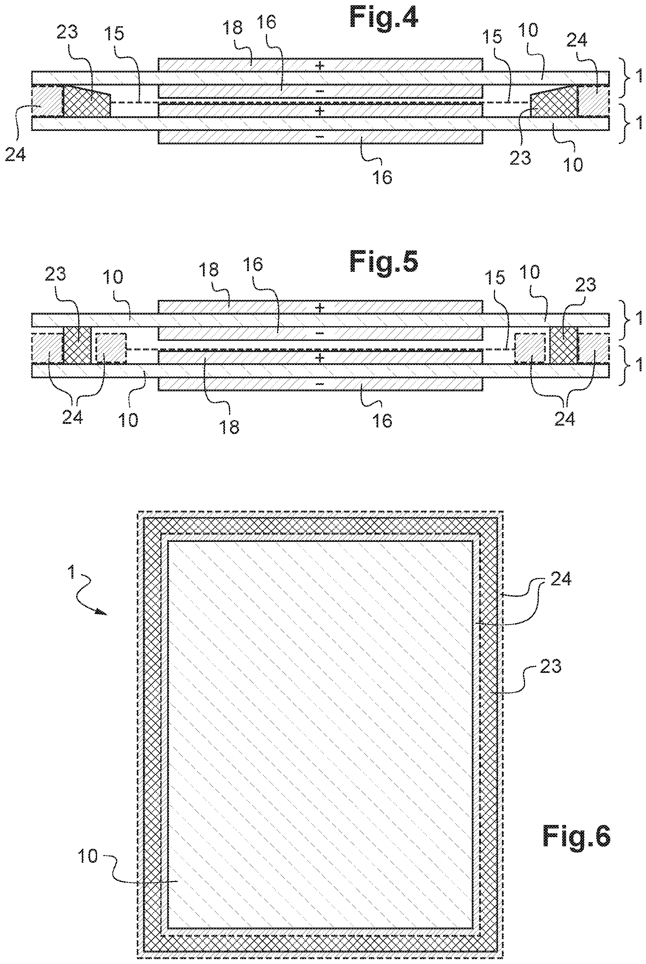

Une solution d'étanchéité à l'aide de joints thermo-scellants 23 dans une batterie bipolaire déjà mise en oeuvre par les inventeurs est illustrée en figure 4 : un joint 23 en matériau thermo-scellant sous forme d'un cadre est prévu à la périphérie d'un collecteur bipolaire 10 et un unique cadre en matériau adhésif 24 est prévu à l'extérieur du cadre 23. Comme on peut le voir de manière schématique sur cette figure 4, le matériau du cadre 23 a flué vers l'intérieur du compartiment de sorte que la zone de collage effective a une surface restreinte en ayant une forme en quelque sorte en bec d'oiseau. Ce collage moindre, non maîtrisé est susceptible d'occasionner un risque de fuite de l'électrolyte. En outre, du fait de ce fluage, il n'est pas possible de maîtriser l'épaisseur d'un compartiment électrochimique.

Aussi, les inventeurs proposent une nouvelle solution d'étanchéité d'une batterie bipolaire Li-ion vis-à-vis de l'électrolyte, plus particulièrement d'un électrolyte liquide, qui soit robuste lors du fonctionnement et dans la durée et facile à mettre en oeuvre.

De manière surprenante, les inventeurs ont pensé à mettre en oeuvre une solution simple : ajouter un cadre 24 en matériau adhésif supplémentaire, à l'intérieur du cadre 23 en matériau thermosensible selon une direction radiale, perpendiculaire à la direction d'empilement des cellules. Ainsi, au lieu d'abandonner complètement la solution mixte de cadre en matériau thermosensible et de cadre en matériau adhésif, ils ont cherché de manière judicieuse à contenir le fluage potentiel du matériau thermosensible, c'est-à-dire à maîtriser ses dimensions lors du chauffage pour réaliser son thermo-scellage.

Ainsi, comme illustré en figures 5 et 6, un dispositif d'étanchéité selon l'invention entre deux collecteurs de courant bipolaire 1 ou entre un collecteur de courant bipolaire et un collecteur de courant terminal 13, 21 d'une batterie Li-ion, est constitué d'un cadre 23 en matériau isolant électrique et thermosensible, et deux cadres 24 en matériau adhésif agencés individuellement de part et d'autre du cadre 23.

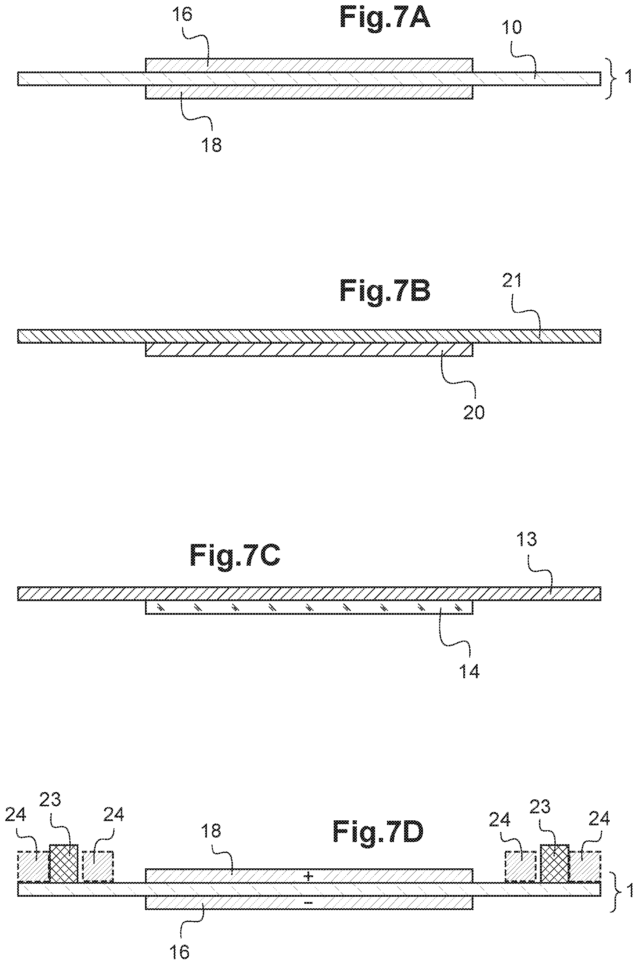

Les étapes de réalisation d'une batterie bipolaire avec les dispositifs d'étanchéité selon l'invention sont décrites ci-après en relation avec les figures 7A à 7J. La batterie réalisée comporte trois cellules C1, C2, C3 empilées l'une sur l'autre et comportant chacune une anode, une cathode et un électrolyte. On précise que tous les substrats 10, 13, 21 sont en aluminium. Toutes les anodes du Li₄Ti₅O₁₂ et toutes les cathodes en LiFeP04. Les séparateurs sont tous dans le même matériau tel que le polyfluorure de vinylidène (PVDF). L'électrolyte utilisé est un mélange de carbonate et d'un sel de lithium LiPF₆.

On précise ici qu'à titre d'exemple avantageux, le matériau de chaque cadre 23 est du polyéthylène (PE) et que chaque cadre adhésif 24 est réalisé à partir d'une bande adhésive commercialisée sous la dénomination 3M® 467MP

On précise également que, comme illustré schématiquement, un cadre 23 a une épaisseur initiale, avant thermo-scellage, plus importante que celle des deux cadres 24 en matériau adhésif qui le bordent. Ainsi, lorsque la périphérie des compartiments électrochimiques est thermo-scellée, le matériau du cadre 23 aura tendance à fluer dans l'espace qui lui est laissé libre entre les deux cadres adhésifs 24 jusqu'à atteindre l'épaisseur de ces derniers.
Etape 1: on réalise un premier collecteur de courant bipolaire 1 avec une face recouverte de l'anode 16 d'une première cellule C1 et la face opposée recouverte de la cathode 18 de la deuxième cellule C2 (figure 7A).

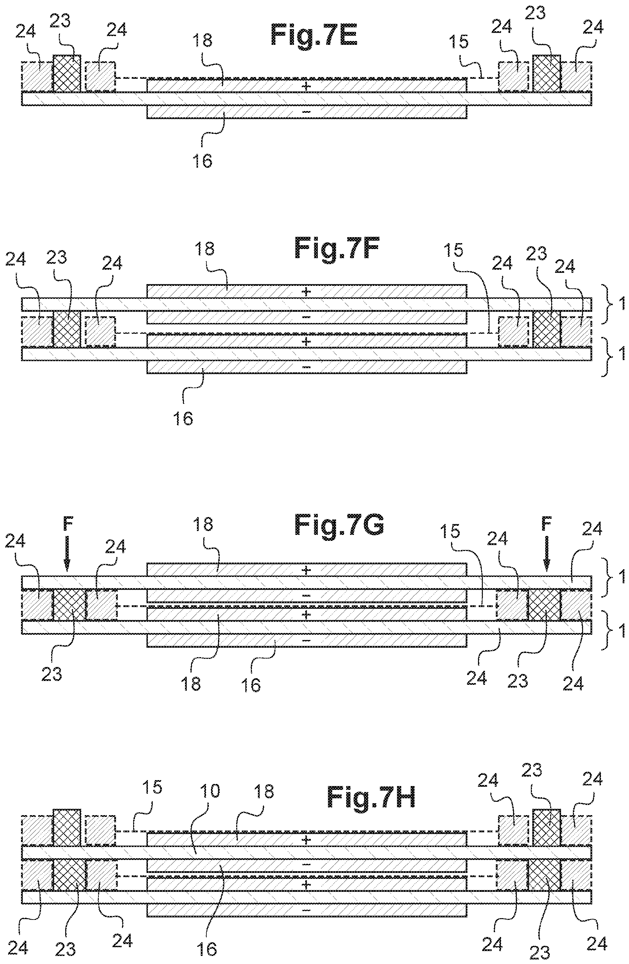

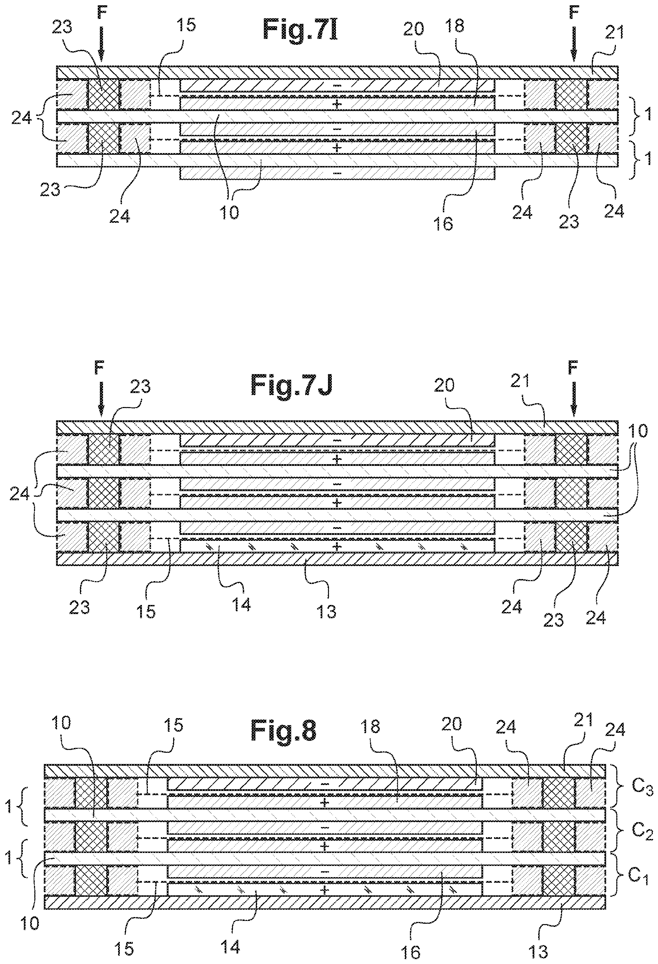

On réalise également un deuxième collecteur de courant bipolaire 1 avec une face recouverte de la cathode 18 d'une troisième cellule C3 et la face opposée recouverte de l'anode 16 de la deuxième cellule C2 (figure 7A).
Etape 2: on réalise un collecteur de courant terminal 21 avec une face recouverte de l'anode 20 d'une troisième cellule C3 (figure 7B).
Etape 3: on réalise un collecteur de courant terminal 13 avec une face recouverte de la cathode 14 de la première cellule C1 (figure 7C).
Etape 4: on réalise à la périphérie de la face recouverte de la cathode 18 du premier collecteur de courant bipolaire 1, un premier dispositif d'étanchéité comprenant un cadre 23 d'un matériau isolant électrique et thermosensible, et deux cadres 24 d'adhésif agencés individuellement de part et d'autre du cadre thermosensible 23 selon une direction radiale, perpendiculaire à la direction d'empilement des cellules (Figure 7D).
Etape 5 : on intercale un premier séparateur 15 en le posant sur la cathode 18 du premier collecteur de courant bipolaire (Figure 7E).
Etape 6 : on empile le deuxième collecteur de courant bipolaire 1 sur le premier collecteur de courant bipolaire 1 avec mise en contact du premier cadre 23 autour de l'anode 16 du deuxième collecteur bipolaire (Figure 7F).
Etape 7 : on réalise un chauffage à l'aide de mors chauffant en forme de U non représentés entourant l'empilement des deux collecteurs de courant bipolaires 1 : on applique ainsi un cycle de pression selon une force F et de température pour réaliser le thermo-scellage entre les deux collecteurs 1 à l'aide du cadre 23 et définir précisément l'épaisseur de la deuxième cellule C2 (compartiment) (figure 7G).
Etape 8 : on réalise à la périphérie de la face recouverte de la cathode 18 du deuxième collecteur de courant bipolaire 1, un deuxième dispositif d'étanchéité comprenant un cadre 23 d'un matériau isolant électrique et thermosensible, et deux cadres 24 d'adhésif agencés individuellement de part et d'autre du cadre thermosensible 23 selon une direction radiale, perpendiculaire à la direction d'empilement des cellules.
Etape 9 : on intercale un deuxième séparateur 15 en le posant sur la cathode 18 du deuxième collecteur de courant bipolaire (Figure 7 H).
Etape 10 : on empile le collecteur de courant terminal 21 avec sa face recouverte de l'anode 20 sur le deuxième collecteur de courant bipolaire 1 avec mise en contact du deuxième cadre 23 à la périphérie de l'anode 20.
Etape 11 : on réalise un chauffage à l'aide de mors chauffant en forme de U non représentés entourant l'empilement des deux collecteurs de courant bipolaires 1 et du collecteur terminal 21 : on applique ainsi un cycle de pression selon une force F et de température pour réaliser le thermo-scellage à l'aide du deuxième cadre 23 et définir précisément l'épaisseur de la troisième cellule C3 (compartiment) (figure 7I).
Etape 12 : on réalise à la périphérie de la face recouverte de la cathode 14 du deuxième collecteur de courant terminal 13, un troisième dispositif d'étanchéité comprenant un cadre 23 d'un matériau isolant électrique et thermosensible, et deux cadres 24 d'adhésif agencés individuellement de part et d'autre du cadre thermosensible 23 selon une direction radiale, perpendiculaire à la direction d'empilement des cellules.
Etape 13: on intercale un troisième séparateur 15 en le posant sur la cathode 14 du deuxième collecteur de courant terminal 13.
Etape 14 : on empile l'ensemble déjà constitué des collecteurs bipolaires 1 et du collecteur de courant terminal 21 thermo-scellés entre eux sur le deuxième collecteur de courant terminal 13 avec sa face recouverte la cathode 14 avec mise en contact du troisième cadre 23 à la périphérie de l'anode 16 du premier collecteur bipolaire.
Etape 15 : on réalise un chauffage à l'aide de mors chauffant en forme de U non représentés entourant l'empilement des deux collecteurs de courant bipolaires 1, du premier collecteur terminal 21 et du deuxième collecteur terminal 13 on applique ainsi un cycle de pression selon une force F et de température pour réaliser le thermo-scellage à l'aide du troisième cadre 23 et définir précisément l'épaisseur de la première cellule C1 (compartiment) (figure 7J).

L'étanchéité ainsi obtenu par tous les cadres 23 et les cadres adhésifs 24 est ainsi parfaite vis-à-vis de l'électrolyte.

On a ainsi réalisé une batterie bipolaire à trois cellules C1, C2, C3 dont l'étanchéité au niveau de leur périphérie est parfaitement assurée et dont l'épaisseur est constante pour chaque cellule C1, C2, C3.

En ce qui concerne les électrolytes, on peut utiliser un électrolyte sous forme polymère ou sous forme liquide imprégné dans un séparateur. Pour l'activation de ces derniers, on peut procéder par imprégnation de chaque séparateur avant leur intégration lors du montage. Alternativement, on peut réaliser le montage avec empilement de l'ensemble de la batterie, réaliser les thermo-scellages conformément à l'invention puis ménager via un tuyau disposé à l'intérieur des cadres, une entrée pour l'électrolyte liquide pour un remplissage ultérieur.

L'invention n'est pas limitée aux exemples qui viennent d'être décrits ; on peut notamment combiner entre elles des caractéristiques des exemples illustrés au sein de variantes non illustrées.

Il va de soi que si l'étanchéité selon l'invention avec le dispositif à cadre thermosensible encadré par deux cadres d'adhésif a été décrite en relation avec une batterie bipolaire à deux cellules empilées, elle peut être réalisée de la même manière pour une batterie à un nombre n de cellules empilées en répétant les étapes 1 à 7 précédentes avec un nombre égal à n-2 de collecteurs bipolaires et deux collecteurs de courant terminaux 13, 21.

## Revendications

1. Batterie bipolaire, de type Li-ion, comprenant :
- au moins une première et deuxième cellules électrochimiques (C1, C2) empilées l'une sur l'autre et comportant chacune une anode, une cathode et un électrolyte ;
- au moins un collecteur de courant bipolaire (1) dont une face est recouverte de l'anode (16) en matériau d'insertion au lithium de la première cellule (C1) et la face opposée est recouverte de la cathode (18) en matériau d'insertion au lithium de la deuxième cellule (C2), le collecteur bipolaire comportant à sa périphérie, sur l'une de ses faces, au moins un premier dispositif d'étanchéité comprenant un cadre (23) d'un matériau isolant électrique et thermosensible, et deux cadres (24) d'adhésif agencés individuellement de part et d'autre du cadre thermosensible selon une direction radiale, perpendiculaire à la direction d'empilement des cellules, le premier dispositif constituant une paroi périphérique étanche à l'électrolyte de la première ou deuxième cellule, qui entoure celle-ci ;
- au moins un premier collecteur de courant (13) adjacent au collecteur bipolaire dont une face est recouverte de la cathode (14) de la première cellule (C1);
- au moins un deuxième collecteur (21) de courant adjacent au collecteur bipolaire dont une face est recouverte de l'anode (20) de la deuxième cellule (C2);
- le premier ou le deuxième collecteur adjacent comportant également, à sa périphérie, sur sa face recouverte, au moins un deuxième dispositif d'étanchéité comprenant un cadre (23) d'un matériau isolant électrique et thermosensible, et deux cadres (24) d'adhésif agencés individuellement de part et d'autre du cadre thermosensible selon une direction radiale, perpendiculaire à la direction d'empilement des cellules, le deuxième dispositif constituant une paroi périphérique étanche à l'électrolyte de la première ou deuxième cellule, qui entoure celle-ci ;
chaque paroi périphérique étanche étant obtenue par une technique de thermo-scellage d'au moins un premier et au moins un deuxième dispositif d'étanchéité (23, 24) sur la face d'un collecteur de courant dépourvue de dispositif d'étanchéité.

2. Batterie bipolaire selon la revendication 1, le matériau du cadre (23) du premier ou deuxième dispositif d'étanchéité étant choisi parmi les polyoléfines thermoplastiques semi-cristallines : polyéthylène (PE), polypropylène (PP), polyméthylpentène (PMP), polybutène-1 (PB-1) ;

3. Batterie bipolaire selon la revendication 2, le matériau du cadre du premier ou deuxième dispositif d'étanchéité étant le polyéthylène (PE).

4. Batterie bipolaire selon l'une des revendications précédentes, le matériau des cadres adhésifs étant un acrylique biface à coeur en polypropylène (PP), ou en poly(téréphtalate d'éthylène) PET ou en polyuréthane.

5. Batterie bipolaire selon l'une des revendications précédentes, l'épaisseur d'un dispositif d'étanchéité étant comprise entre 50 et 500 µm, de préférence 150 µm plus ou moins 50 µm.

6. Batterie bipolaire selon l'une des revendications précédentes, la largeur de chaque dispositif d'étanchéité étant comprise entre 0,3 et 3 cm.

7. Batterie bipolaire selon l'une des revendications précédentes, comprenant un empilement de n cellules électrochimiques, avec un nombre de n-2 collecteurs de courant bipolaires, l'un des collecteurs adjacents étant un collecteur de courant terminal, l'autre des collecteurs adjacents étant l'autre collecteur de courant terminal.

8. Batterie bipolaire selon l'une des revendications précédentes, les anodes sont en Li₄Ti₅O₁₂ et les cathodes en LiFeP04.

9. Procédé de réalisation d'une batterie bipolaire comprenant au moins une première et deuxième cellules électrochimiques empilées l'une sur l'autre et comportant chacune une anode, une cathode et un électrolyte,
a/ réalisation d'un collecteur de courant bipolaire avec une face recouverte de l'anode en matériau d'insertion au lithium de la première cellule et la face opposée recouverte de la cathode en matériau d'insertion au lithium de la deuxième cellule ;
b/ réalisation d'un premier collecteur de courant, destiné à être adjacent au collecteur bipolaire dont une face est recouverte de la cathode de la première cellule ;
c/ réalisation d'un deuxième collecteur de courant, destiné à être adjacent au collecteur bipolaire dont une face est recouverte de l'anode de la deuxième cellule ;
d/ réalisation à la périphérie du collecteur de courant bipolaire, sur l'une de ses faces, d'au moins un premier dispositif d'étanchéité comprenant un cadre (23) d'un matériau isolant électrique et thermosensible, et deux cadres (24) d'adhésif agencés individuellement de part et d'autre du cadre thermosensible selon une direction radiale, perpendiculaire à la direction d'empilement des cellules;
e/ empilement du collecteur de courant bipolaire avec le premier ou le deuxième collecteur de courant avec intercalage d'un premier séparateur (15) entre eux, l'empilement avec intercalage étant réalisé de sorte que la cathode du premier collecteur adjacent ou l'anode du deuxième collecteur de courant est en regard de respectivement l'anode ou la cathode du collecteur bipolaire en étant séparés du premier séparateur et avec mise en contact du cadre thermosensible du premier dispositif d'étanchéité ;
f/ chauffage du cadre thermosensible (23) du premier dispositif d'étanchéité en contact à la périphérie des collecteurs ;
g/ réalisation à la périphérie, sur sa face recouverte, du premier ou deuxième collecteur de courant non thermo-scellé au collecteur de courant bipolaire, d'au moins un deuxième dispositif d'étanchéité comprenant un cadre (23) d'un matériau isolant électrique et thermosensible, et deux cadres (24) d'adhésif agencés individuellement de part et d'autre du cadre thermosensible selon une direction radiale, perpendiculaire à la direction d'empilement des cellules ;
h/ empilement du collecteur de courant bipolaire thermo-scellé avec le premier ou le deuxième collecteur de courant avec le premier ou deuxième collecteur de courant non thermo-scellé avec intercalage d'un deuxième séparateur (15) entre eux, l'empilement avec intercalage étant réalisé de sorte que la cathode du premier collecteur adjacent ou l'anode du deuxième collecteur de courant est en regard de respectivement l'anode ou la cathode du collecteur bipolaire en étant séparés du deuxième séparateur et avec mise en contact du cadre thermosensible du deuxième dispositif d'étanchéité ;
i/ chauffage du cadre thermosensible (23) du deuxième dispositif d'étanchéité en contact à la périphérie des collecteurs.

10. Procédé selon la revendication 9, le chauffage selon les étapes f/ et i/ étant réalisé à l'aide de mors chauffants en forme de U autour des parties périphériques des collecteurs.

11. Procédé selon la revendication 9 ou 10, le chauffage selon les étapes f/ et i/ étant réalisé à une température inférieure ou égale à 150°C.

## Patentansprüche

1. Bipolare Lithiumionenbatterie, umfassend:
- mindestens eine erste und eine zweite elektrochemische Zelle (C1, C2), die übereinander gestapelt sind und jeweils eine Anode, eine Kathode und einen Elektrolyten aufweisen;
- mindestens einen bipolaren Stromabnehmer (1), von dem eine Seite von der Anode (16) aus Lithium-Insertionsmaterial der ersten Zelle (C1) bedeckt ist und die gegenüberliegende Seite von der Kathode (18) aus Lithium-Insertionsmaterial der zweiten Zelle (C2) bedeckt ist, wobei der bipolare Stromabnehmer an seinem Rand auf einer seiner Seiten mindestens eine erste Abdichtungsvorrichtung umfasst, die einen Rahmen (23) aus einem elektrisch isolierenden und wärmeempfindlichen Material und zwei Klebstoffrahmen (24), die einzeln beiderseits des wärmeempfindlichen Rahmens in einer radialen Richtung, die senkrecht zu der Stapelrichtung der Zellen verläuft, angeordnet sind, aufweist, wobei die erste Vorrichtung eine Umfangswand bildet, die gegenüber dem Elektrolyten der ersten oder zweiten Zelle dicht ist, die diese umgibt;
- mindestens einen ersten Stromabnehmer (13), der an den bipolaren Abnehmer angrenzt, dessen eine Seite von der Kathode (14) der ersten Zelle (C1) bedeckt ist;
- mindestens einen zweiten Stromabnehmer (21), der an den bipolaren Abnehmer angrenzt, dessen eine Seite von der Anode (20) der zweiten Zelle (C2) bedeckt ist;
- wobei der erste oder der zweite angrenzende Abnehmer ebenfalls an seinem Rand auf seiner bedeckten Seite mindestens eine zweite Abdichtungsvorrichtung umfasst, die einen Rahmen (23) aus einem elektrisch isolierenden und wärmeempfindlichen Material und zwei Klebstoffrahmen (24), die einzeln beiderseits des wärmeempfindlichen Rahmens in einer radialen Richtung, die senkrecht zu der Stapelrichtung der Zellen verläuft, angeordnet sind, aufweist, wobei die zweite Vorrichtung eine Umfangswand bildet, die gegenüber dem Elektrolyten der ersten oder zweiten Zelle dicht ist, die diese umgibt;
wobei jede dichte Umfangswand durch eine Technik des Heißsiegelns mindestens einer ersten und mindestens einer zweiten Abdichtungsvorrichtung (23, 24) auf der Seite eines Stromabnehmers, auf der keine Abdichtungsvorrichtung vorhanden ist, erhalten wird.

2. Bipolare Batterie nach Anspruch 1, wobei das Material des Rahmens (23) der ersten oder zweiten Abdichtungsvorrichtung aus den folgenden semikristallinen thermoplastischen Polyolefinen gewählt ist: Polyethylen (PE), Polypropylen (PP), Polymethylpenten (PMP), Polybuten-1 (PB-1);

3. Bipolare Batterie nach Anspruch 2, wobei das Material des Rahmens der ersten oder zweiten Abdichtungsvorrichtung das Polyethylen (PE) ist.

4. Bipolare Batterie nach einem der vorhergehenden Ansprüche, wobei das Material der Kleberahmen ein doppelseitiges Acryl mit einem Kern aus Polypropylen (PP) oder aus Poly(ethylenterephthalat) (PET) oder aus Polyurethan ist.

5. Bipolare Batterie nach einem der vorhergehenden Ansprüche, wobei die Dicke einer Abdichtungsvorrichtung zwischen 50 und 500 µm, vorzugsweise 150 µm plus oder minus 50 µm beträgt.

6. Bipolare Batterie nach einem der vorhergehenden Ansprüche, wobei die Breite jeder Abdichtungsvorrichtung zwischen 0,3 und 3 cm beträgt.

7. Bipolare Batterie nach einem der vorhergehenden Ansprüche, umfassend einen Stapel von n elektrochemischen Zellen mit einer Anzahl von n-2 bipolaren Stromabnehmern, wobei einer der angrenzenden Abnehmer ein Anschluss-Stromabnehmer ist, wobei der andere der angrenzenden Stromabnehmer der andere Anschluss-Stromabnehmer ist.

8. Bipolare Batterie nach einem der vorhergehenden Ansprüche, die Anoden sind aus Li₄Ti₅O₁₂ und die Kathoden aus LiFePO₄.

9. Verfahren zur Herstellung einer bipolaren Batterie, die mindestens eine erste und eine zweite elektrochemische Zelle aufweist, die übereinander gestapelt sind und jeweils eine Anode, eine Kathode und einen Elektrolyten aufweisen,
a. Herstellung eines bipolaren Stromabnehmers, wobei eine Seite von der Anode aus Lithium-Insertionsmaterial der ersten Zelle bedeckt ist und die gegenüberliegende Seite von der Kathode aus Lithium-Insertionsmaterial der zweiten Zelle bedeckt ist;
b. Herstellung eines ersten Stromabnehmers, der dazu bestimmt ist, an den bipolaren Abnehmer anzugrenzen, dessen eine Seite von der Kathode der ersten Zelle bedeckt ist;
c. Herstellung eines zweiten Stromabnehmers, der dazu bestimmt ist, an den bipolaren Abnehmer anzugrenzen, dessen eine Seite von der Anode der zweiten Zelle bedeckt ist;
d. Herstellung, am Rand des bipolaren Stromabnehmers, auf einer seiner Seiten, mindestens einer ersten Abdichtungsvorrichtung, die einen Rahmen (23) aus einem elektrisch isolierenden und wärmeempfindlichen Material und zwei Klebstoffrahmen (24), die einzeln beiderseits des wärmeempfindlichen Rahmens in einer radialen Richtung, die senkrecht zu der Stapelrichtung der Zellen verläuft, angeordnet sind, umfasst;
e. Stapelung des bipolaren Stromabnehmers mit dem ersten oder dem zweiten Stromabnehmer mit Einlegen eines ersten Trennelements (15) dazwischen, wobei die Stapelung mit Einlegen so ausgeführt wird, dass die Kathode des ersten angrenzenden Abnehmers oder die Anode des zweiten Stromabnehmers der Anode bzw. der Kathode des bipolaren Abnehmers gegenüberliegt, wobei sie von dem ersten Trennelement getrennt sind, und mit Inkontaktbringen des wärmeempfindlichen Rahmens der ersten Abdichtungsvorrichtung;
f. Erhitzen des wärmeempfindlichen Rahmens (23) der ersten Abdichtungsvorrichtung in Kontakt mit dem Rand der Abnehmer;
g. Herstellung, am Rand des ersten oder zweiten Stromabnehmers, der nicht an den bipolaren Stromabnehmer heißgesiegelt ist, auf dessen bedeckter Seite, mindestens einer zweiten Abdichtungsvorrichtung, die einen Rahmen (23) aus einem elektrisch isolierenden und wärmeempfindlichen Material und zwei Klebstoffrahmen (24), die einzeln beiderseits des wärmeempfindlichen Rahmens in einer radialen Richtung, die senkrecht zu der Stapelrichtung der Zellen verläuft, angeordnet sind, umfasst;
h. Stapelung des bipolaren Stromabnehmers, der mit dem ersten oder dem zweiten Stromabnehmer heißgesiegelt ist, mit dem ersten oder zweiten nicht heißgesiegelten Stromabnehmer mit Einlegen eines zweiten Trennelements (15) dazwischen, wobei die Stapelung mit Einlegen so ausgeführt wird, dass die Kathode des ersten angrenzenden Abnehmers oder die Anode des zweiten Stromabnehmers der Anode bzw. der Kathode des bipolaren Abnehmers gegenüberliegt, wobei sie von dem zweiten Trennelement getrennt sind, und mit Inkontaktbringen des wärmeempfindlichen Rahmens der zweiten Abdichtungsvorrichtung;
i. Erhitzen des wärmeempfindlichen Rahmens (23) der zweiten Abdichtungsvorrichtung in Kontakt mit dem Rand der Abnehmer.

10. Verfahren nach Anspruch 9, wobei das Erhitzen gemäß den Schritten f. und i. mithilfe von U-förmigen Heizbacken um die Randbereiche der Abnehmer herum durchgeführt wird.

11. Verfahren nach Anspruch 9 oder 10, wobei das Erhitzen gemäß den Schritten f. und i. bei einer Temperatur kleiner oder gleich 150 °C durchgeführt wird.

## Claims

1. A bipolar battery, of the Li-ion type, comprising:
- at least one first and second electrochemical cells (C1, C2) stacked on top of one other and each comprising an anode, a cathode and an electrolyte;
- at least one bipolar current collector (1), one face of which is covered with the anode (16) of lithium-based insertion material of the first cell (C1) and the opposite face is covered with the cathode (18) of lithium-based insertion material of the second cell (C2), the bipolar collector comprising at its periphery, on one of its faces, at least one first sealing device comprising a frame (23) of an electrically insulating heat-sensitive material, and two frames (24) of adhesive arranged individually on either side of the heat-sensitive frame in a radial direction, perpendicular to the direction of stacking of the cells, the first device constituting a peripheral wall impervious to the electrolyte of the first or second cell, which surrounds the latter;
- at least one first current collector (13) adjacent to the bipolar collector, one face of which is covered with the cathode (14) of the first cell (C1);
- at least one second current collector (21) adjacent to the bipolar collector, one face of which is covered with the anode (20) of the second cell (C2);
- the first or second adjacent collector also comprising, at its periphery, on its covered face, at least one second sealing device comprising a frame (23) of an electrically insulating heat-sensitive material, and two frames (24) of adhesive arranged individually on either side of the heat-sensitive frame in a radial direction, perpendicular to the direction of stacking of the cells, the second device constituting a peripheral wall impervious to the electrolyte of the first or second cell, which surrounds the latter;
each impervious peripheral wall being obtained by a heat-sealing technique of at least one first and at least one second sealing device (23, 24) on the face of a current collector that does not have a sealing device.

2. The bipolar battery as claimed in claim 1, the material of the frame (23) of the first or second sealing device being selected from the semicrystalline thermoplastic polyolefins: polyethylene (PE), polypropylene (PP), polymethylpentene (PMP), polybutene-1 (PB-1).

3. The bipolar battery as claimed in claim 2, the material of the frame of the first or second sealing device being polyethylene (PE).

4. The bipolar battery as claimed in one of the preceding claims, the material of the adhesive frames being a double-faced acrylic with a core of polypropylene (PP), or of poly(ethylene terephthalate) PET or of polyurethane.

5. The bipolar battery as claimed in one of the preceding claims, the thickness of a sealing device being between 50 and 500 µm, preferably 150 µm plus or minus 50 µm.

6. The bipolar battery as claimed in one of the preceding claims, the width of each sealing device being between 0.3 and 3 cm.

7. The bipolar battery as claimed in one of the preceding claims, comprising a stack of n electrochemical cells, with a number of n-2 bipolar current collectors, one of the adjacent collectors being a terminal current collector, the other one of the adjacent collectors being the other terminal current collector.

8. The bipolar battery as claimed in one of the preceding claims, the anodes being of Li₄Ti₅O₁₂ and the cathodes of LiFePO₄.

9. A method for making a bipolar battery comprising at least one first and second electrochemical cells stacked on top of one other and each comprising an anode, a cathode and an electrolyte,
a/ producing a bipolar current collector with a face covered with the anode made of lithium-based insertion material of the first cell and the opposite face covered with the cathode made of lithium-based insertion material of the second cell;
b/ producing a first current collector, intended to be adjacent to the bipolar collector, one face of which is covered with the cathode of the first cell;
c/ producing a second current collector, intended to be adjacent to the bipolar collector, one face of which is covered with the anode of the second cell;
d/ at the periphery of the bipolar current collector, on one of its faces, producing at least one first sealing device comprising a frame (23) of an electrically insulating heat-sensitive material, and two frames (24) of adhesive arranged individually on either side of the heat-sensitive frame in a radial direction, perpendicular to the direction of stacking of the cells;
e/ stacking the bipolar current collector with the first or second current collector, interposing a first separator (15) between them, the stacking and interposing being carried out in such a way that the cathode of the first adjacent collector or the anode of the second current collector is opposite respectively to the anode or cathode of the bipolar collector, being separated from the first separator and with bringing the first sealing device into contact with the heat-sensitive frame;
f/ heating the heat-sensitive frame (23) of the first sealing device in contact at the periphery of the collectors;
g/ at the periphery, on its covered face, of the first or second current collector not heat-sealed to the bipolar current collector, producing at least one second sealing device comprising a frame (23) of an electrically insulating heat-sensitive material, and two frames (24) of adhesive arranged individually on either side of the heat-sensitive frame in a radial direction, perpendicular to the direction of stacking of the cells;
h/ stacking the heat-sealed bipolar current collector with the first or second current collector with the first or second current collector that has not been heat-sealed, interposing a second separator (15) between them, the stacking and interposing being carried out in such a way that the cathode of the first adjacent collector or the anode of the second current collector is opposite respectively to the anode or cathode of the bipolar collector, being separated from the second separator and with bringing the second sealing device into contact with the heat-sensitive frame;
i/ heating the heat-sensitive frame (23) of the second sealing device in contact at the periphery of the collectors.

10. The method as claimed in claim 9, the heating according to steps f/ and i/ being carried out using U-shaped heating jaws around the peripheral parts of the collectors.

11. The method as claimed in claim 9 or 10, the heating according to steps f/ and i/ being carried out at a temperature less than or equal to 150°C.
